# EUROPEAN PATENT APPLICATION

(11) **EP 4 191 025 A1**
(43) Date of publication of application: **07.06.2023**
(21) Application number: 21212359.0
(22) Date of filing: 03.12.2021
(51) Int. Cl.: F01D 11/00, F01D 25/26

(54) **A SEAL FOR SEALING THE CASING SPLIT LINE OF A GAS TURBINE ASSEMBLY FOR POWER PLANT, A GAS TURBINE ASSEMBLY FOR POWER PLANT COMPRISING SUCH A SEAL AND A METHOD FOR RETROFITTING A GAS TURBINE ASSEMBLY FOR POWER PLANT**

(71) Applicant: Ansaldo Energia Switzerland AG, 5400 Baden (CH)
(72) Inventor: HUBER, Thomas, 5400 BADEN (CH); GOERZER, Michael, 5400 BADEN (CH); KOS, Robert, 5400 BADEN (CH); BRICAUD, Cyrille Jerome, 5400 BADEN (CH)
(74) Representative: Martini, Gabriele

(57) **Abstract**

A seal (30) for sealing the casing split line of a gas turbine assembly for power plant; wherein the casing comprises a casing lower half (31) and an casing upper half (33) lowered on the lower half during assembly; wherein the seal is intended to be housed in part in a lower groove (34) obtained in the casing lower half and in part in a facing upper groove ( 35) obtained in the casing upper half for avoiding leakage outside the casing; wherein the seal is a multi-layer seal comprising: a first layer (36) comprising at least a metal sheet configured for ensuring a high sealing performance; a second layer (37) thicker than the first and comprising at least a metal sheet configured for guaranteeing the mechanical load induced by high pressure difference in the split plane; wherein the second layer (37) is intended to be in use radially inward with respect to the first layer (36) coupled to the outer face of the second layer.

## Description

### Field of the Invention

The present invention relates to the technical field of the gas turbine assemblies for power plant. As known, in these assemblies an incoming air flow is compressed in a compressor and then mixed with fuel (gas fuel and/or oil fuel) in a combustor to produce a hot gas flow to be expanded in a turbine. The rotation of the turbine generates a rotating work on a rotor in turn connected to a generator for power production. The rotor and the rotating parts connected to the rotor are housed in a casing realized in form of two complementary circumferential sectors or halves bolted together at a split line. In this technical field, the present invention addresses the problem of how to improve the sealing of the above casing split line.

### Background

As known, a gas turbine assembly for power plant comprises a compressor unit, a combustor unit and a turbine unit. The compressor unit is configured for compressing incoming air supplied at a compressor inlet. The compressed air leaving the compressor unit flows into a closed volume (called "plenum") and from there into the combustor unit. This combustor unit comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and flows by the turbine unit performing a rotating work on a rotor connected to a generator. Usually the same rotor, that could be made as a single piece or in form of a plurality of adjacent rotor disks, supports also the rotating parts of the compressor assembly and it defines the main axis of the system. As known, the turbine unit and the compressor unit comprise a plurality of rows of rotating blades supported by the rotor. As known, the rotor and the connected rotating parts are housed in a casing that is concentric and surrounding the gas turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known. According to a first embodiment, the gas turbine comprises a first combustor and a second combustor that are annular shaped and are physically separated by a turbine, called high pressure turbine. Downstream the second combustor a second turbine is provided (called low pressure turbine).

According to a second embodiment, the sequential gas turbine is not provided with the high-pressure turbine and the combustor assembly is realized in form of a plurality of can-combustors wherein each can-combustor comprises a first combustor and a second combustor arranged directly one downstream the other inside a common casing can-shaped.

These two examples of gas turbine assemblies have been cited only as non-limiting examples wherein the present invention can be applied. Indeed, according the present invention the gas turbine assembly may also involve a single stage of combustion with a single annular combustion chamber.

As known in this technical field, the terms "circumferential, radial, axial, outer and inner" refer to the rotor or assembly axis (that is parallel to the main air/hot gas flow). The terms "downstream and upstream" refer to the main direction of the air/hot gas flowing from the compressor to the turbine.

In all above mentioned non limiting examples of gas turbine assemblies the casing housing the rotating parts in realized in form of two complementary circumferential sectors or halves. During assembly, the rotating parts are first placed in the lower half of the casing and only after the upper half of the casing is lowered on the lower half. The coupling surfaces of the upper and lower halves are during assembly horizontal surfaces. Finally, the two halves are connected together (for instance bolted together) at the split line.

As known, a high sealing performance at the split line is required for avoiding leakage of the flow flowing inside and outside of the turbine casing. Thus, it is common practice to provide the split line with seals configured to guarantee a high sealing capability also during possible slight opening of the split plane (few tens of millimeters). Indeed this undue opening can occur due to the thermal loading acting on the casing and on the split plane bolts. Moreover, the seal design is required to be very robust to seal due to the high pressure difference acting at the split line (up to 35 bar). Additionally, the seals are required to be mechanically integer during assembly when the upper half casing is lowered on the lower half casing with pre-assembled seals in position, i.e. seals housed in corresponding seats obtained in the spilt surface of the casing lower half and projecting towards the moving casing upper half. Indeed, during assembly possible contacts between the seals and the lowering casing upper half may occur.

An example of a seal as above described and currently used by the Applicant is known as "box seal". This seal is housed in a seat or groove obtained in the casing lower half and is spring activated against the casing upper half. The aim of this solution is to seal by contacting the plane counter surface of the casing upper half by a spring activated contact. However, the "box seal" are nor suitable for sealing the split plane in case of opening more than few tens of millimeters and, unfortunately, this opening may locally occur during operation.

An alternative known solution is to use a sealing paste instead of the seals. In this case, the sealing derives purely from the pressed sealing paste (pressed by the casing bolts) at the split plane surfaces. However, conventional sealing paste on the split plane surfaces are not suitable for sealing the split plane in case of high pressure and a split plane opening.

Thus, today there is the need to realize a new solution for improving the sealing of the split plane of a gas turbine casing.

### Disclosure of the invention

Accordingly, a primary object of the present invention is to provide a new and inventive seal for sealing the casing split line of a gas turbine assembly for power plant wherein this seal is suitable for improving the sealing feature and avoiding leakage.

For this purpose, according the present invention a seal is provided according to claim 1.

Thus, the seal of the present invention comprises at least two layers wherein each layer is configured for performing different features that in common allow to reach an improved sealing of the casing split line.

Preferably, these two layers are coupled by glue, in particular a glue configured to dissolve during the operation due to the high temperature.

The seal preferably discloses a rectangular shape and the dimension ratios of the seal are approximately radial thickness/ circumferential height < 1.

In use, the second layer is the inner layer (closer to the turbine axis) and the first layer (thin metal strip) is coupled (as mentioned preferably by glue) to the outer face of the second layer. Thus the first layer is the on the side of pressure activated contact to the sealing surfaces of the grooves. According to Applicant tests, the present solution offers a high sealing performance more than 2 times better than current box seal design.

The second layer (thick metal strip or strips) enables a repeatable and safe assembly of the casings together with the thin part and acts as a holder for the thin part.

An enhancement of sealing performance at similar robustness of the overall seal design can be achieved by using a second layer made of several metal strips (of same or different seal strip thickness) . The second layer provides the integrity in operation due to the solidity from material thickness. Furthermore, the second layer provides practical and secure assembly due to a chamfer in the seal part which is oriented to the also chamfered seal groove in the upper half casing which in assembly is lowered on the pre-assembly of lower half casing and the seal.

The seal comprises also a third "sacrificial" layer acting as radial positioning device configured to provide the seal with an exact pre-defined assembly position within the lower half seal groove. This positioning device is defined as sacrificial because it is made of plastic configured to dissolve during the operation due to the high temperature. The positioning device thus comprises a plastic spacer that may be realized in in form of a third layer or of a plurality of spaces outwardly projecting the outer face of the first layer of the seal. The plastic spacer allow to reduce the radial clearance inside the lower groove and to orient the seal upright (vertical). The plastic spacers are fixed to the seal by adhesive means e.g. a glue (non-permanent connection).

Preferably, the seal moreover comprises one or several pins in part housed in holes of the second layer and in part radially protruding inwards. These pins allow to provide a correct mounting/axial assembly position of the seal because the head of the pin(s) in use sits in specific pockets obtained in the lower groove on the casing lower half.

The multi-layer seal for sealing the split plane as foregoing described is adapted not only for being installed in new gas turbine assemblies but also for retrofitting application, where usually the casing presents higher split leakages due to plastic deformation and fretting marks in the split plane. Thus, according to the present application a method for retrofitting a gas turbine assembly according to claim 11 is provided.

Finally, the present invention also refers directly to a gas turbine assembly according to claim 12.

As foregoing described, the seal is circumferential oriented (i.e. almost vertical) and housed in part in a lower groove obtained in the casing lower half and in part in a upper groove obtained in the casing upper half. The second layer (thick metal strip or strips) is the inner layer faced to the inner part of the turbine and the fist layer is connected to the outer face of the second layer so that the fist layer is pressure activated against the seat.

The spacer, if present, is connected to the outer face of the first layer.

The axial positioning pin (or pins), if present, is connected to the second layer and is inwardly projecting in radial seat obtained in the lower half casing.

### Brief description of drawings

The invention may be best understood by reference to the following detailed description of the invention, which describes an exemplary embodiment of the invention, taken in conjunction with the accompanying drawings, in which:
- figure 1 is a schematic view of a not-limiting example of a gas turbine that can be improved by the present invention;
- figure 2 is a schematic view of a portion of the split surface of the lower half casing wherein sets in form of grooves have been obtained for housing the new seals of the present invention;
- figures 3A and 3B are schematic views (respectively facing the low pressure side and the high pressure side) of an example of a multi-layer seal according to the present invention;
- figures 4A and 4B are respectively a schematic view of the seal of figures 3 housed in a corresponding groove and a cross section view ;
- figures 5A and 5B are schematic views of the seal of figures 3 during assembly steps;
- figures 6A, 6B, 7A and 7B are respectively top and cross section views disclosing a comparison between s prior art seal and a seal according to the invention.

### Detailed description of preferred embodiments of the invention

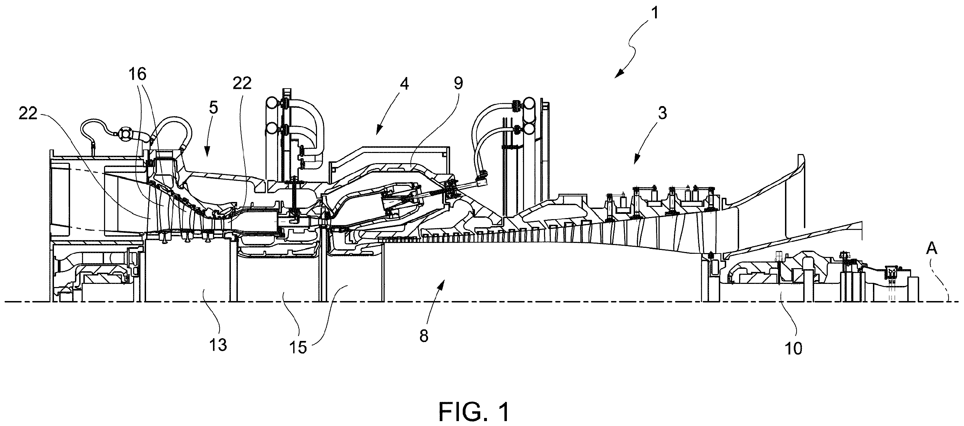

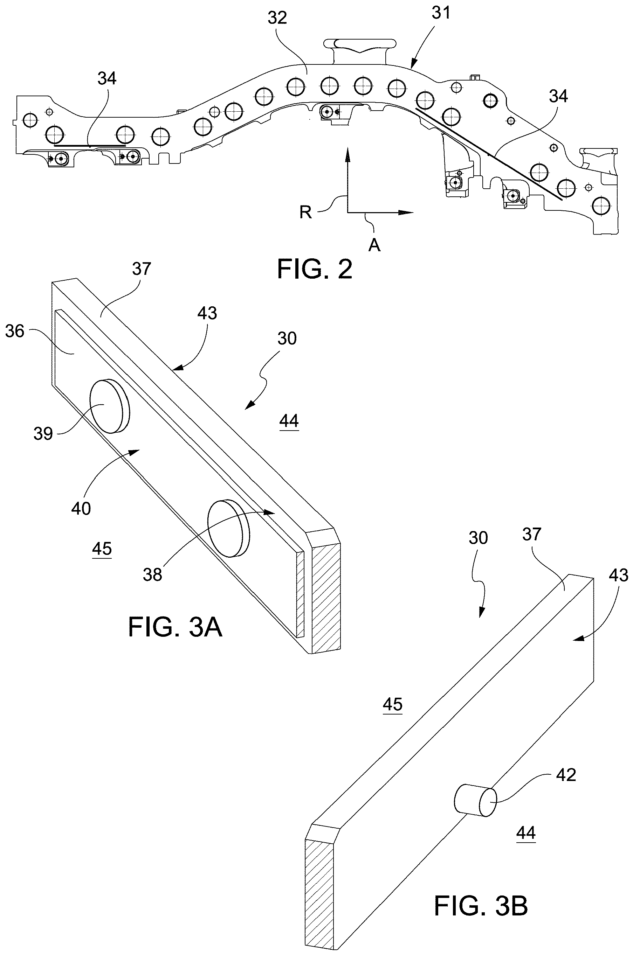

In cooperation with attached drawings, the technical contents and detailed description of the present invention are described thereinafter according to preferred embodiments, being not used to limit its executing scope. Reference is made to figure 1 which is a schematic view of a not-limiting example of a gas turbine assembly for power plant. In figure 1 the gas turbine assembly 1 comprises a compressor unit 3, a combustion unit 4, a turbine unit 5 and a generator (for simplicity, not shown in the attached figures). In particular the example of figure 1 discloses a gas turbine with a first combustor, an high pressure turbine, a second combustor and a low pressure turbine. The rotating parts of the compressor 3, turbine 5 and generator are supported by a common rotor 8 extending along an axis A. the rotating parts are housed in a casings 9. In figure 1, as a non-limiting example, the rotor 8 comprises a front shaft 10, a rear shaft 13 and in between a plurality of adjacent rotor disks 15 clamped as a pack by a central tie rod. As an alternative, the rotor disks may be welded together. Each rotor disk supports a row of blades 16 of the compressor and of the turbine. The casing 9 supports a plurality of stator rows of vanes 22 alternated with the rotating rows of blades 16. According to the invention, the casing 9 is divided in a lower half (reference 31 in figure 2) and an upper half, the two halves are connected together at a split line. The spilt line is thus the coupling line wherein the lower split surface of the casing lower half is coupled to the upper split surface of the casing upper half. During assembly the casing upper half is lowered on the casing lower half housing the rotor, the compressor and the turbine.

Figure 2 discloses a schematic view of a portion of the split line, i.e. the split surface of the casing lower half 31. The reference A and R refer to the axial direction (parallel to the rotor axis) and to the radial direction. In figure 2 the reference 32 has been used for disclosing the coupling surface of the casing lower half 31, however this reference may be used in general for disclosing casing the split line. According to figure 2, seats in form of grooves 34 have been obtained in casing lower half 31 at the split surface 32 for housing the new seals 30 of the present invention.

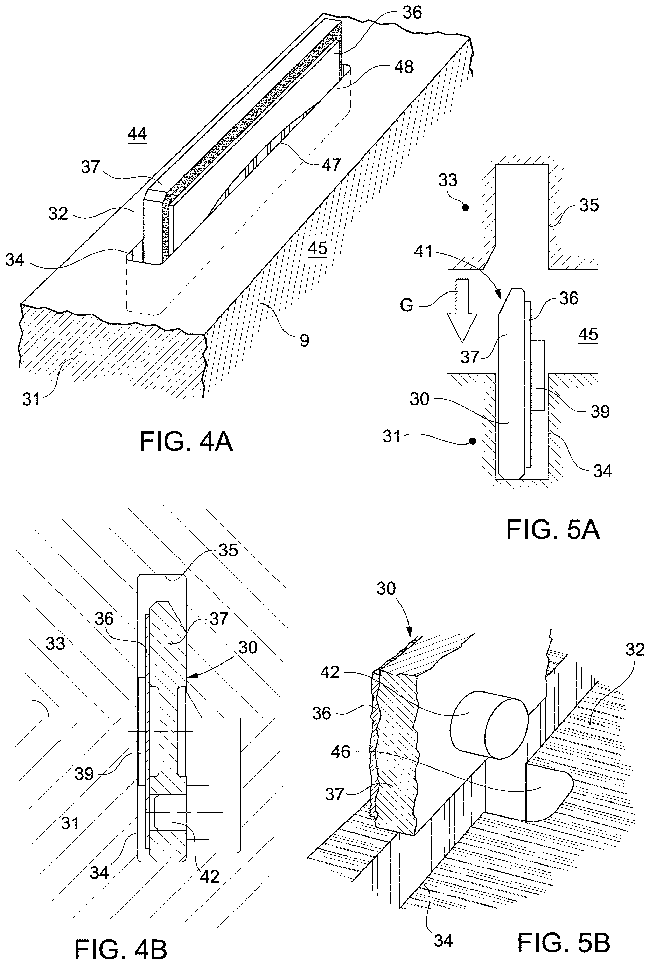

Figures 3A, 3B, 4A and 4B are respectively a schematic view and a cross-section view of an example of a multi-layer seal according to the present invention. Figure 5 discloses a schematic view of an assembly step of the casing wherein the upper half 33 is lowered (arrow G) on the lower part 31 of the casing provided with the seal 30 housed in a corresponding seat 34. References 44 and 45 refer to the high-pressure side and to the low-pressure side that are separated by the seal. As disclosed in figures 3A and 3B, the seal 30 has a rectangular shape and the dimension ratios of the seal 30 are approximately radial thickness/ circumferential height < 1. As disclosed in figure 4A and 4B the seal 30 is a multi-layer seal comprising:
- a first outer layer 36 (facing in use the low pressure side 45) comprising at least a metal sheet configured for ensuring a high sealing performance;
- a second inner layer 37 thicker than the first and comprising at least a metal sheet configured for guaranteeing the mechanical load induced by high pressure difference in the split plane.

As disclosed in figure 4A, in use the second layer 37 is intended to be in use radially inward the gas turbine facing in use the high-pressure side 44. The inner face 43 of the second layer 37 is thus facing the inner space of the turbine where high pressure is present.

In the example disclosed, the second layer 37 is a single thick metal sheet comprising an upper inner chamfer edge 41. Moreover, the seal comprises a plurality of plastic spacers 39 coupled by adhesive means to the outer face 40 of the first layer 36. These spacers 39 are configured for ensuring the correct lateral position of the seal 30 inside the lower seal groove 34. Finally, figures 3B, 4B and 5B disclose a pin 42 housed in a radial hole of the second layer 37. In use the head of the pin 42 is protruding inwardly (high pressure side 44) and it is intended to be housed in a corresponding pocket 46 obtained in the lower seal groove 34 of the casing lower half 31.

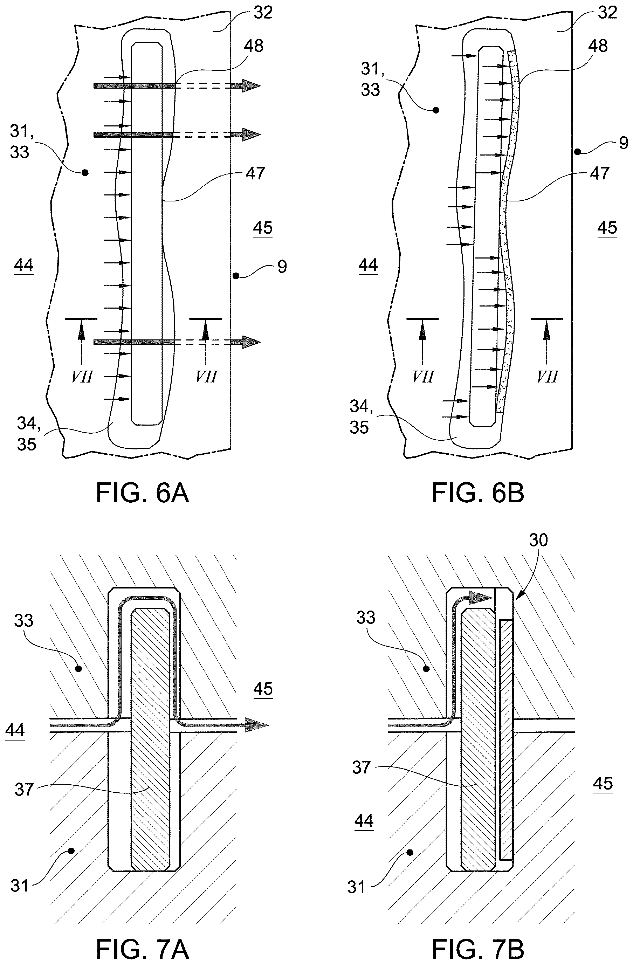

Finally, figures 6A, 6B, 7A and 7B are respectively top and cross-section views disclosing a comparison between a prior art seal (figures 6A and 7A) and a seal according to the invention (figures 6B and 7B). In figures 6A and 6B the references 48 and 47 refer to different portions of the groove 34 where at 48 openings due to deformation of the groove may occur. In these figures, the deformations 48 have been enlarged for clarity. At this openings 48 the single thick piece seal of the prior art is not suitable to avoid leakage of the air bypassing locally the seal. On the contrary, as disclosed in figures 6B and 7B the thin layer of the new seal 30 is suitable to follow the shape of the groove also at openings 48 for closing the gap.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A seal (30) for sealing the casing split line (32) of a gas turbine assembly (1) for power plant;
wherein the casing (9) comprises a casing lower half (31) and an casing upper half (33) lowered on the casing lower half (31) during assembly;
wherein the seal (30) is intended to be housed in part in a lower groove (34) obtained in the casing lower half (31) and in part in a facing upper groove (35) obtained in the casing upper half (33) for avoiding leakage outside the casing (9); wherein the seal (30) is a multi-layer seal comprising:
- a first layer (36) comprising at least a metal sheet configured for ensuring a high sealing performance;
- a second layer (37) thicker than the first and comprising at least a metal sheet configured for guaranteeing the mechanical load induced by high pressure difference in the split plane;
wherein the second layer (37) is intended to be in use radially inward with respect to the first layer (36) coupled to the outer face (38) of the second layer (37).

2. Seal as claimed in claim 1, wherein the second layer (37) comprises a single thick metal sheet.

3. Seal as claimed in claim 1, wherein the second layer (37) comprises plurality or a packet of thin metal sheets.

4. Seal as claimed in any one of the foregoing claims, wherein the seal (30) discloses a rectangular shape and the dimension ratios of the seal (30) are approximately radial thickness/ circumferential height < 1.

5. Seal as claimed in any one of the foregoing claim, wherein the second layer (37) comprises an upper inner chamfer edge (41).

6. Seal as claimed in any one of the foregoing claims, wherein a radial positioning device is provided for radially positioning the seal (30) in the lower groove (34).

7. Seal as claimed in claim 6, wherein the radial positioning device is a third layer of plastic coupled to the outer face (40) of the first layer (36) and configured for ensuring the correct lateral position of the seal (30) inside the lower seal groove (34).

8. Seal as claimed in claim 6, wherein the positioning device comprises a plurality of plastic spacers (39) coupled to the outer face (40) of the first layer (36) and configured for ensuring the correct lateral position of the seal (30) inside the lower seal groove (34).

9. Seal as claimed in claim 8, wherein the plastic spacers (39) are fixed to the first layer (36) by adhesive means.

10. Seal as claimed in any one of the foregoing claims, wherein at least a pin (42) is provided for axially positioning the seal (30) in the lower groove (34); the pin (42) being radially protruding inwardly from the second layer (37) and being intended to be housed in at least a corresponding pocket obtained in the lower seal groove (34) of the casing lower half (31).

11. Seal as claimed in any one of the foregoing claims, wherein the second layer (37) comprises a plurality of through holes to control the pressure load on the first layer.

12. Method for retrofitting a gas turbine assembly, the method comprises the steps of:
a) providing a gas turbine assembly comprising:
- a rotor having an axis;
- a compressor comprising blades connected to the rotor;
- a turbine comprising blades connected to the rotor;
- an outer casing, wherein the casing comprises a lower half and un upper half connected together at a split line; the upper half that during assembly being lowered on the lower half housing the rotor, the compressor and the turbine;
- at least a former seal arranged at the split line;
b) releasing and raising the casing upper half with respect to the casing lower half;
c) replacing the former seal with a new seal according to any one of the foregoing claims.

13. A gas turbine assembly for power plant, the assembly comprising:
- a rotor (8) having an axis;
- a compressor (3) comprising blades (16) connected to the rotor (8);
- a turbine (5) comprising blades connected to the rotor (8) ;
- a casing (9), wherein the casing (9) comprises a lower half (31) and un upper half (33) connected together at a split line (32); the upper half (33) during assembly being lowered on the lower half (31) housing the rotor (8), the compressor (3) and the turbine (9);
- at least a seal (30) according to any one of the foregoing claims 1-11 arranged at the split line (32) housed in part in a lower groove (34) obtained in the casing lower half (31) and in part in a upper groove (35) obtained in the casing lower half (33).
